# EUROPÄISCHE PATENTANMELDUNG

(11) **EP 4 625 926 A1**
(43) Veröffentlichungstag der Anmeldung: **01.10.2025**
(21) Anmeldenummer: 24166385.5
(22) Anmeldetag: 26.03.2024
(51) Int. Cl.: H04L 41/12, H04L 41/22, H04L 41/0806, H04L 41/0853, H04L 41/08, H04L 41/5041, H04L 41/5054, H04L 41/0823

(54) **VERFAHREN ZUM COMPUTERIMPLEMENTIERTEN ERMITTELN EINES ZU VERWENDENDEN PROTOKOLLS AUS EINER VIELZAHL MÖGLICHER PROTOKOLLE IN EINEM KOMMUNIKATIONSNETZWERK**

(71) Anmelder: Siemens Aktiengesellschaft, 80333 München (DE)
(72) Erfinder: Duschner, Bernd, 90441 Nürnberg (DE); Keidel, Torsten, 91056 Erlangen (DE); Rehm, Andreas, 90475 Nürnberg (DE)
(74) Vertreter: Siemens Patent Attorneys

(57) **Zusammenfassung**

Es wird ein Verfahren zum computerimplementierten Ermitteln eines zu verwendenden Protokolls (NPR1, NPR2, NPR3) aus einer Vielzahl möglicher Protokolle (NPR1, NPR2, NPR3) in einem Kommunikationsnetzwerk (30), das eine Mehrzahl an Geräten (31-37) umfasst, die in vorgegebener Weise miteinander vernetzt sind, beschrieben. Das Verfahren umfasst die folgenden Schritte:
- Einlesen eines Wissensgraphen (20), der Wissenspunkte (WP1, WP2, WP3) umfasst, wobei die Wissenspunkte (WP1, WP2, WP3) eine Information über eine Netzwerktopologie, ein Protokoll (NPR1, NPR2, NPR3), Gerätefähigkeiten oder eine Anforderung (REQ1, REQ2) umfassen, und wobei die Wissenspunkte (WP1, WP2, WP3) in dem Wissensgraphen (20) in vorgegebener Weise miteinander verknüpft sind;
- Einlesen zumindest einer Nutzer-Anforderung (UREQ), die an das Netzwerk (30) gestellte technische Eigenschaften charakterisiert;
- Einlesen einer Nutzer-Eingabe, die zumindest ein Gerät (31-37) der Mehrzahl an Geräten (31-37) des zu konfigurierenden Netzwerks (30) als bekanntes Gerät (31, 35) repräsentiert;
- Ermitteln von Netzwerkeigenschaften des Kommunikationsnetzwerks (30) aus zuvor ermittelten Informationen des bekannten Geräts (31, 35);
- Durchsuchen des Wissensgraphen (20), wobei die zumindest eine Nutzer-Anforderung (UREQ) und der Netzwerkeigenschaften des Kommunikationsnetzwerks (30) als Eingangsinformationen verarbeitet werden, um das zu verwendende Protokoll (NPR1, NPR2, NPR3) aus dem Wissensgraphen (20) zu bestimmen und auszulesen;
- automatisierte Konfiguration der Geräte (31-37) des Kommunikationsnetzwerks (30) mit Parametern des bestimmten und zu verwendenden Protokolls (NPR).

## Beschreibung

Die Erfindung betrifft ein Verfahren und eine Vorrichtung zum computerimplementierten Ermitteln eines zu verwendenden Protokolls aus einer Vielzahl möglicher Protokolle in einem Kommunikationsnetzwerk, das eine Mehrzahl an Geräten umfasst, die in vorgegebener Weise miteinander vernetzt sind.

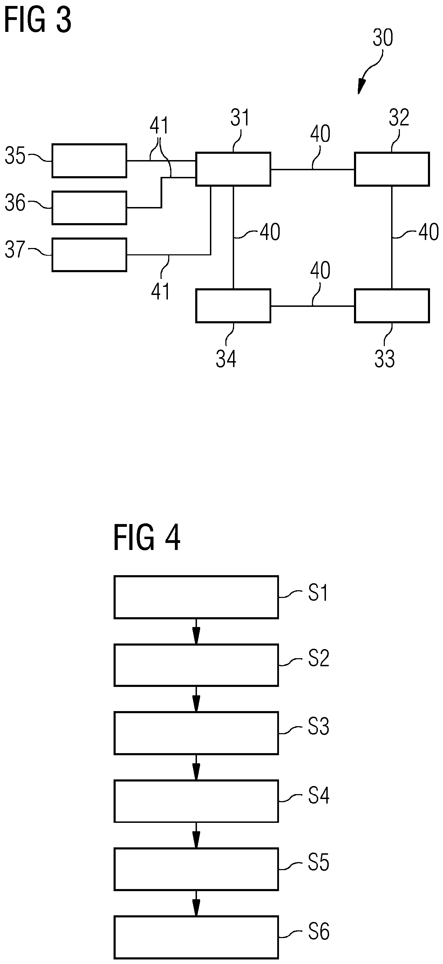

Moderne Kommunikationsnetzwerke können eine große Anzahl an Geräten, die allgemein Netzwerkkomponenten darstellen, umfassen, die abhängig von örtlichen und/oder technischen Gegebenheiten über leitungsgebundene oder drahtlose Kommunikationsverbindungen, miteinander vernetzt sind. Figur 3 zeigt ein exemplarisches und einfaches Kommunikationsnetzwerk 30, das vorliegend sieben Geräte 31 bis 37 umfasst. Die Geräte 31 bis 37 sind in einer vorgegebenen Weise über Kommunikationsverbindungen 40, 41 miteinander zum Austausch von Daten verbunden. Wie der Figur 3 ohne Weiteres zu entnehmen ist, sind die Geräte 31 bis 34 über Kommunikationsverbindungen 40 beispielhaft zu einer so genannten Ringtopologie zusammengeschlossen. Die Geräte 35 bis 37 sind über Kommunikationsverbindungen 41 beispielhaft mit dem Gerät 31 in Sterntopologie verbunden. Abhängig von den technischen Eigenschaften der Geräte 31 bis 37, welche entweder ausschließlich zur Kommunikation ausgebildete Netzwerkkomponenten (z.B. Router oder Switches) oder Recheneinheiten, Steuereinheiten, Sensoren, Aktoren, usw. sein können, erfolgt die Konfiguration mit bestimmten Netzwerkprotokollen (kurz: Protokollen).

In der Praxis wird viel technisches Know-how benötigt, wann welches Protokoll für die Netzwerkkomponenten geeignet oder zwingend erforderlich ist, um Anforderungen der auf den Geräten 31 bis 37 ablaufenden Applikationen zu erfüllen. Die Entscheidung, welche Protokolle in dem Kommunikationsnetzwerk 30 eingesetzt werden oder werden sollen, wurde in der Vergangenheit manuell gefällt. Hierbei kann nicht immer die optimale Wahl getroffen werden. Zudem besteht die Schwierigkeit, die ausgewählten Protokolle explizit auf der Vielzahl an Geräten 31 bis 37 entsprechend zu konfigurieren.

Es ist Aufgabe der Erfindung, ein Verfahren und eine Vorrichtung anzugeben, mit denen die Ermittlung eines zu verwendenden Protokolls aus einer Vielzahl möglicher Protokolle in einem Kommunikationsnetzwerk vereinfacht durchgeführt werden kann, um eine automatisierte Konfiguration zu ermöglichen.

Gemäß einem ersten Aspekt der Erfindung wird ein Verfahren zum computerimplementierten Ermitteln eines zu verwendenden Protokolls aus einer Vielzahl möglicher Protokolle in einem Kommunikationsnetzwerk, das eine Mehrzahl an Geräten umfasst, die in vorgegebener Weise miteinander vernetzt sind, vorgeschlagen. Die Anzahl an Geräten in einem solchen Kommunikationsnetzwerk kann beliebig sein. Bei den Geräten handelt es sich allgemein um Netzwerkkomponenten, die entweder ausschließlich zur Kommunikation oder Weiterleitung von Datenpaketen ausgebildet sind (z.B. Router oder Switches) oder um solche Geräte, die Netzwerkkomponenten für die Kommunikation mit anderen Geräte umfassen, wie z.B. Recheneinheiten, Steuereinheiten, Sensoren, Aktoren, usw..

Das Verfahren umfasst die folgenden Schritte:
Einlesen eines Wissensgraphen, der Wissenspunkte umfasst, wobei die Wissenspunkte eine Information über eine Netzwerktopologie, ein Protokoll, Gerätefähigkeiten oder eine Anforderung umfassen, und wobei die Wissenspunkte in dem Wissensgraphen in vorgegebener Weise miteinander verknüpft sind. Insbesondere stellt die Anforderung eine Nutzer-Anforderung an das Kommunikationsnetzwerk dar, die einen oder mehrere der folgenden Parameter umfasst: Umschaltzeit zwischen Kommunikationsverbindungen; Verfügbarkeit eines oder mehrerer Geräte und/oder Kommunikationsverbindungen; Zuverlässigkeit eines oder mehrerer Geräte und/oder Kommunikationsverbindungen; Namensauflösung; usw.. Netzwerktopologien sind alle in einem Kommunikationsnetzwerk möglichen Netzwerktopologien, wie z.B. eine Ringtopologie, eine Sterntopologie, ein Datenbus, usw. Unter dem Begriff Gerätefähigkeiten sind die technischen Fähigkeiten eines jeweiligen Geräts, in Bezug auf seine Kommunikationseigenschaften, wie z.B. Geschwindigkeit, Bandbreite, mögliche Datenprotokolle, usw. zu verstehen. Protokolle sind die in einem Kommunikationsnetzwerk grundsätzlich zum Einsatz kommenden Netzwerkprotokolle, wie z.B. RSTP, PTP, NTP, MRP, usw. Die oben gemachten Aufzählungen sind lediglich als Beispiele zu verstehen.

Einlesen zumindest einer Nutzer-Anforderung, die an das Netzwerk gestellte technische Eigenschaften charakterisiert. Die Nutzer-Anforderung kann von einem Nutzer, der das Kommunikationsnetzwerk konfigurieren möchte, z.B. über eine geeignete Nutzerschnittstelle eingegeben werden. Die Eingabe kann dabei in einer beliebigen Art und Weise erfolgen, z.B. unter Nutzung vordefinierter Anforderungen aus einer Dropdown-Liste, als Freitext, als Sprache usw. Die Nutzerschnittstelle kann hierzu geeignete Eingabemittel, wie z.B. Tastatur, Zeigergerät (Maus, Trackpad, usw.), Touchscreen, Mikrofon, usw. umfassen.

Einlesen einer Nutzer-Eingabe, die zumindest ein Gerät der Mehrzahl an Geräten des zu konfigurierenden Netzwerks als bekanntes Gerät repräsentiert. Die Nutzer-Eingabe kann von dem Nutzer, der das Kommunikationsnetzwerk konfigurieren möchte, z.B. über die genannte Nutzerschnittstelle eingegeben werden. Die Eingabe kann in einer beliebigen Art und Weise erfolgen, z.B. unter Nutzung vordefinierter Namen/Geräteinformationen aus einer Dropdown-Liste, durch Interaktion mit einer grafischen Repräsentation des Kommunikationsnetzwerks, durch Auswahl einzelner oder mehrerer der Geräte, durch Sprachbefehle usw.. Welches Gerät der Mehrzahl an Geräten des zu konfigurierenden Netzwerks und/oder welche Anzahl an Geräten des zu konfigurierenden Kommunikationsnetzwerks durch den Nutzer ausgewählt bzw. eingegeben werden, ist beliebig.

Ermitteln von Netzwerkeigenschaften des Kommunikationsnetzwerks aus zuvor ermittelten Informationen des zumindest einen bekannten Geräts. Diese Informationen ermöglichen es, weitere für die Konfiguration erforderlichen Daten des Kommunikationsnetzwerks zu sammeln. Insbesondere unterstützt dies das Durchsuchen des Wissensgraphen, wobei die zumindest eine Nutzer-Anforderung und die Netzwerkeigenschaften des Kommunikationsnetzwerks als Eingangsinformationen verarbeitet werden, um das zu verwendende Protokoll aus dem Wissensgraphen zu bestimmen und auszulesen. Das Durchsuchen des Wissensgraphen kann dabei unter Nutzung von Suchalgorithmen der Graphentheorie erfolgen. Das hierbei zugrunde liegende Prinzip besteht darin, ausgehend von den Eingangsinformationen die beste Ausgangsinformation zu finden.

Als abschließender Schritt erfolgt eine automatisierte Konfiguration der Geräte des Kommunikationsnetzwerks mit Parametern des bestimmten und zu verwendenden Protokolls.

Das beschriebene Verfahren ermöglicht eine computergestützte, automatisierte Konfiguration eines beliebig komplexen Kommunikationsnetzwerks, indem für die Geräte des Kommunikationsnetzwerks ein zu verwendendes Protokoll automatisiert ermittelt, und die dafür notwendigen Einstellungen an die Geräte übertragen werden. Das Verfahren basiert darauf, die Geräte des Kommunikationsnetzwerks über ihren topologischen Zusammenhang als Verbund zu erfassen, wodurch die Ermittlung eines zu verwendenden Protokolls und darauf basierend eine automatisierte Konfiguration ermöglicht wird.

Gemäß einer zweckmäßigen Ausgestaltung umfasst das Ermitteln von Netzwerkeigenschaften das Ermitteln der weiteren Geräte des Kommunikationsnetzwerks aus zuvor ermittelten Informationen des bekannten Netzwerks.

Alternativ oder zusätzlich kann vorgesehen sein, dass das Ermitteln von Netzwerkeigenschaften das Ermitteln der Netzwerktopologie des Kommunikationsnetzwerks umfasst. Die Netzwerktopologie kann dabei abschnittsweise unterschiedlich oder über das gesamte Kommunikationsnetzwerk auf dem gleichen Verbindungprinzip basieren. Weist das Kommunikationsnetzwerk Abschnitte gleicher oder unterschiedlicher Netzwerktopologie, z.B. einen oder mehrere Ringe und/oder eine oder mehrere Sterntopologien auf, können die einzelnen Abschnitte im Rahmen der Bestimmung des zu verwendenden Protokolls zunächst isoliert betrachtet werden. Diejenigen Geräte, die mehreren unterschiedlichen Netzwerktopologien angehören, werden vorzugsweise gesondert analysiert, um die Schnittstellenkommunikation zwischen den abschnittsweise unterschiedlichen Netzwerktopologien berücksichtigen zu können.

Eine weitere zweckmäßige Ausgestaltung sieht vor, dass das Ermitteln von Netzwerkeigenschaften das Ermitteln umfasst, welche Einstellungen auf den oder für die Geräte gespeichert sind. Die Einstellungen können in einem Speicher des jeweiligen Geräts hinterlegt sein. Ebenso können die Einstellungen für die Geräte aus einem oder mehreren zentralen Datenspeichern, z.B. eines Rechnersystems, abgerufen werden.

Eine weitere zweckmäßige Ausgestaltung sieht vor, dass das Ermitteln von Netzwerkeigenschaften das Ermitteln umfasst, welche Einstellungen auf den oder für die Geräte konfigurierbar sind. Die konfigurierbaren Einstellungen können in einem Speicher des jeweiligen Geräts hinterlegt sein. Ebenso können die konfigurierbaren Einstellungen für die Geräte aus einem oder mehreren zentralen Datenspeichern, z.B. eines Rechnersystems, abgerufen werden.

Eine weitere zweckmäßige Ausgestaltung sieht vor, dass ein relevanter Teil des Wissensgraphen, der den Pfad zu dem bestimmten und zu verwendenden Protokoll umfasst, auf einer Nutzerschnittstelle für den Nutzer als Information ausgegeben wird. Die Ausgabe des relevanten Teils des Wissensgraphen auf einer Nutzerschnittstelle, insbesondere einem Bildschirm, ermöglicht es dem Nutzer nachzuvollziehen, warum ein bestimmtes Protokoll für die Konfiguration der Geräte des Kommunikationsnetzwerks ausgewählt wurde.

Es kann weiterhin vorgesehen sein, dass auf der Nutzerschnittstelle ein Vorschlag für den Nutzer oder eine durch den Nutzer änderbare Vorauswahl als zu verwendendes Protokoll ausgegeben wird, wenn bei der Durchsuchung des Wissensgraphen mehr als ein mögliches Protokoll bestimmt wurde. Bei dieser Ausgestaltung wird der Situation Rechnung getragen, dass in manchen Kommunikationsnetzwerken nicht nur ein Protokoll für die Verwendung infrage kommt, sondern mehrere Protokolle. Dem Nutzer wird dann der Vorschlag für ein bevorzugtes Protokoll visualisiert ausgegeben, wobei der Nutzer den Vorschlag übernehmen oder ändern kann. Der Vorschlag berücksichtigt z.B. die Netzwerktopologie sowie eine Nutzeranforderung, indem Geräte, die über eine Kommunikationsverbindung miteinander verbunden sind, das gleiche Protokoll verwenden müssen oder sollen.

Im Rahmen der vorliegenden Erfindung können bekannte, beliebige Protokolle zur Anwendung kommen, wobei insbesondere RSTP, PTP, NTP, MRP in Betracht kommen.

Eine weitere zweckmäßige Ausgestaltung sieht vor, dass beim Durchsuchen des Wissensgraphen als Eingangsinformationen die zumindest eine Nutzer-Anforderung und aus den Netzwerkeigenschaften ermittelte Informationen über die Geräte des Kommunikationsnetzwerks verarbeitet werden. Die ermittelten Informationen über die Geräte umfassen insbesondere die Information darüber, welche Einstellungen auf den oder für die Geräte gespeichert sind, sowie welche Einstellungen auf den oder für die Geräte konfigurierbar sind.

Gemäß einem zweiten Aspekt wird ein Computerprogrammprodukt vorgeschlagen, das Befehle umfasst, die bei der Ausführung des Programms durch einen Computer diesen veranlassen, das Verfahren gemäß einer oder mehrerer Ausgestaltungen der Erfindung auszuführen.

Gemäß einem dritten Aspekt der vorliegenden Erfindung wird eine Vorrichtung zum computerimplementierten Ermitteln eines zu verwendenden Protokolls aus einer Vielzahl möglicher Protokolle in einem Kommunikationsnetzwerk, das eine Mehrzahl an Geräten umfasst, die in vorgegebener Weise vernetzt wird, vorgeschlagen, wobei die Vorrichtung eine Recheneinheit umfasst, die dazu eingerichtet ist, das Verfahren gemäß einer oder mehrerer Ausgestaltungsformen der Erfindung durchzuführen.

Die Erfindung wird nachfolgend näher anhand der Beschreibung eines Ausführungsbeispiels näher erläutert. Es zeigen:
- Figur 1: eine erfindungsgemäße Vorrichtung zum computerimplementierten Ermitteln eines zu verwendenden Protokolls, die zur Durchführung des erfindungsgemäßen Verfahrens eingerichtet ist;
- Figur 2: eine schematische Darstellung einer Bildschirmanzeige auf einer Nutzerschnittstelle zur Visualisierung des Ergebnisses des erfindungsgemäßen Verfahrens;
- Figur 3: eine schematische Darstellung eines exemplarischen Kommunikationsnetzwerks mit einer Mehrzahl an Netzwerkkomponenten, die in unterschiedlichen Netzwerktopologien miteinander verbunden sind; und
- Figur 4: einen schematischen Ablaufplan, der die Schritte des erfindungsgemäßen Verfahrens visualisiert.

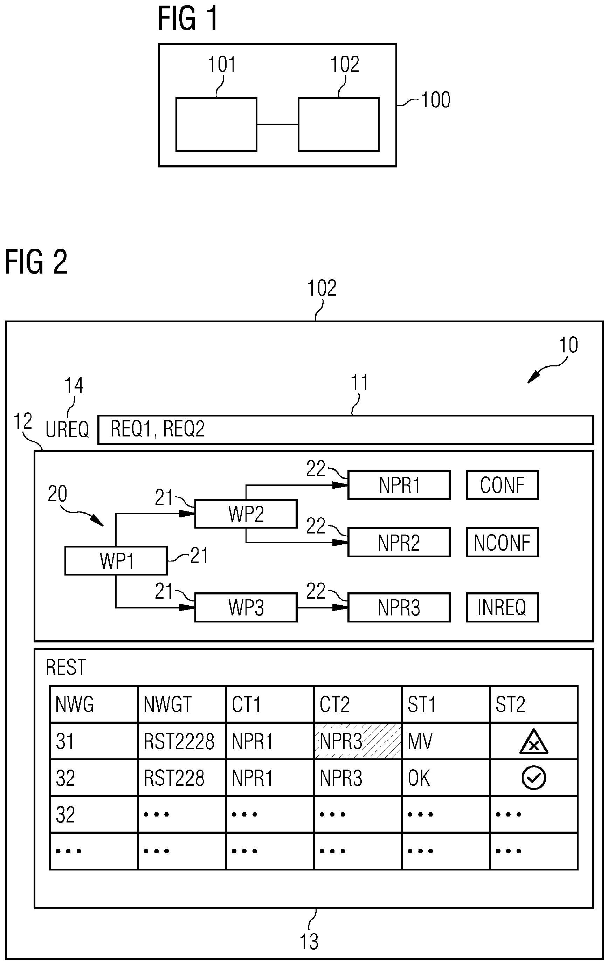

Figur 1 zeigt eine erfindungsgemäße Vorrichtung 100 zum computerimplementierten Ermitteln eines zu verwendenden Protokolls NPR aus einer Vielzahl möglicher Protokolle NPR1, NPR2, NPR3 in einem, wie in Figur 3 gezeigten, Kommunikationsnetzwerk 30. Die Vorrichtung 100 umfasst als Rechner einen Prozessor 101 sowie eine Nutzerschnittstelle 102. Die Nutzerschnittstelle 102 umfasst ein im Detail nicht dargestelltes Display sowie ein ebenfalls im Detail nicht dargestelltes Eingabemittel. Beispielsweise kann die Nutzerschnittstelle 102 als Touch-Screen ausgebildet sein. Ebenso können das Display und das Eingabemittel, z.B. eine Tastatur, ein Zeigergerät, ein Mikrofon, usw., getrennt ausgebildet sein.

Mit Hilfe der in Figur 1 gezeigten Vorrichtung soll für ein wie in Figur 3 beispielhaft gezeigtes und zuvor bereits beschriebenes Kommunikationsnetzwerk 30, das eine Mehrzahl an Geräten 31 bis 37 umfasst, die in vorgegebener Weise über Kommunikationsverbindungen 40, 41 miteinander vernetzt sind, ein zu verwendendes Protokoll computerimplementiert ermittelt werden, um die automatisierte Konfiguration der Geräte 31-37 zu ermöglichen. Dies soll einen Benutzer, der das Kommunikationsnetzwerk 30 konfigurieren möchte, bei der Konfiguration unterstützen, zu der großes Vorwissen erforderlich ist.

Die Ermittlung des zur verwendenden Protokolls und die Konfiguration der Geräte 31 bis 37 des Kommunikationsnetzwerks 30 erfolgt interaktiv durch Benutzung der Benutzerschnittstelle 102 der Vorrichtung 100.

Dieses Vorgehen wird nachfolgend unter Bezugnahme auf Figur 2 erläutert, welche eine schematische Darstellung einer Bildschirmanzeige 10 auf der Nutzerschnittstelle 102 zur Visualisierung eines Teilschritts des vorgeschlagenen Verfahrens illustriert.

Die Bildschirmanzeige 10 umfasst ein Eingabefeld 11, einen ersten Anzeigebereich 12 sowie einen zweiten Anzeigebereich 13. Dem Eingabefeld 11 ist eine Eingabeaufforderung 14 zur Eingabe einer Nutzer-Anforderung "UREQ" vorangestellt. Die Eingabeaufforderung 14 dient dazu, den Nutzer in einem ersten Schritt S1 (Figur 4) dazu zu veranlassen, eine oder mehrere Nutzer-Anforderungen in das Eingabefeld 11 einzugeben. In dem in Figur 2 gezeigten Ausführungsbeispiel sind zwei Anforderungen REQ1, REQ2 als Nutzer-Anforderung UREQ durch den Nutzer eingegeben. Die Anforderungen REQ1, REQ2 charakterisieren einen oder mehrere der folgenden Parameter: Umschaltzeit zwischen Kommunikationsverbindungen des Kommunikationsnetzwerks; Verfügbarkeit eines oder mehrerer Geräte und/oder Kommunikationsverbindungen des Kommunikationsnetzwerks; Zuverlässigkeit eines oder mehrerer Geräte und/oder Kommunikationsverbindungen des Kommunikationsnetzwerks; Namensauflösung usw.

In einem zweiten Schritt S2 (Figur 4) erfolgt ein Einlesen einer Nutzer-Eingabe, die zumindest eines der Geräte 31 bis 37 der Mehrzahl an Geräten des zu konfigurierenden Kommunikationsnetzwerks 30 als bekanntes Gerät repräsentiert (in Figur 2 nicht dargestellt). Dies können beispielsweise die in Figur 3 mit dem Bezugszeichen 31 und 35 gekennzeichneten Geräte sein, die dem Nutzer in dem Kommunikationsnetzwerk bekannt sind. Das Gerät 31 repräsentiert beispielsweise eine Netzwerkkomponente, wie z.B. einen Switch, der die in einer Ringtopologie verschalteten Geräte 31 bis 34 sowie die in einer Sterntopologie mit dem Gerät 31 verbundenen Geräte 35 bis 37 miteinander verbindet.

Aus der Information über die bekannten Geräte 31, 35 können in einem dritten Schritt S3 (Figur 4) Informationen dieser Geräte ermittelt werden, z.B. welche Einstellungen auf den Geräten 31, 35 oder für die Geräte 31, 35 gespeichert sind oder welche Einstellungen auf diesen Geräten 31, 35 konfigurierbar sind. Diese Informationen kann die Vorrichtung 100 beispielsweise aus einer in den Figuren nicht dargestellten Datenbank abgerufen.

Die Vorrichtung 100 ist darüber hinaus in der Lage, einen Wissensgraphen 20, der eine Vielzahl an Wissenspunkten 21, 22 umfasst, einzulesen. Der Wissensgraph 20 kann beispielsweise in einer Datenbank gespeichert sein. Die Wissenspunkte 21, 22 des Wissensgraphen 20 umfassen eine Information über eine Netzwerktopologie, ein Protokoll, Gerätefähigkeiten und eine Anforderung. Die Wissenspunkte sind dabei unabhängig von dem zu konfigurierenden Kommunikationsnetzwerk 30 miteinander verknüpft. Das Einlesen des Wissensgraphen 20 kann beispielsweise in einem Schritt S4 (Figur 4) erfolgen. Dieser Schritt ist in der Bildschirmanzeige 10 in Figur 2 nicht dargestellt.

Die Reihenfolge der Abarbeitung der oben beschriebenen Schritt S1 bis S4 ist in beliebiger Weise miteinander vertauschbar.

Nachdem die zuvor beschriebenen Informationen vorliegen, erfolgt in einem Schritt S5 ein Durchsuchen des Wissensgraphen 20, wobei die zumindest eine Nutzer-Anforderung UREQ, welche als Parameter die Anforderungen REQ1 und REQ2 umfasst, und die Netzwerkeigenschaften des Kommunikationsnetzwerks 30 als Eingangsinformationen verarbeitet werden. Unter Nutzung von Algorithmen der Graphentheorie kann dann das zu verwendende Protokoll aus dem Wissensgraphen 20 bestimmt und ausgelesen werden.

Das Ermitteln der Netzwerkeigenschaften umfasst dabei insbesondere das Ermitteln der weiteren Geräte, im vorliegenden Ausführungsbeispiel der Geräte 32 bis 34 sowie 36 und 37, des Kommunikationsnetzwerks 30 aus den zuvor ermittelten Informationen des zumindest einen bekannten Geräts (hier: 31 und 35). Alternativ oder zusätzlich umfasst das Ermitteln von Netzwerkeigenschaften das Ermitteln einer oder mehrerer Netzwerktopologien des Kommunikationsnetzwerks 30. Wie zuvor beschrieben umfasst das in Figur 3 gezeigte Kommunikationsnetzwerk 30 eine Ringtopologie mit den Geräten 31 bis 34 sowie eine Sterntopologie mit den Geräten 31 und 35 bis 37.

Sind die in dem Kommunikationsnetzwerk 30 enthaltenen Geräte 31-37 bekannt, erfolgt im Schritt des Ermittelns von Netzwerkeigenschaften weiterhin, welche Einstellungen auf den oder für die Geräte 31 bis 37 bereits gespeichert sind und/oder welche Einstellungen auf den oder für die Geräte 31 bis 37 grundsätzlich konfigurierbar sind.

In einem Schritt S6 erfolgt dann eine automatisierte Konfiguration sämtlicher Geräte 31 bis 37 des Kommunikationsnetzwerks 30 mit Parametern des bestimmten und zu verwendenden Netzwerkprotokolls.

Der Nutzer wird in der Bildschirmanzeige 10 dergestalt unterstützt, dass ihm ein relevanter Teil des Wissensgraphen 20, der den Pfad zu dem bestimmten und zu verwendenden Protokoll umfasst, als Information ausgegeben wird. Dies ist in dem ersten Anzeigebereich 12 schematisch dargestellt. Der Wissensgraph 20 umfasst hier drei Wissenspunkte 21, welche Anforderungen WP1, WP2 und WP3 repräsentieren. Solche Anforderungen können beispielsweise eine "Zuverlässigkeit" (WP1) sein, welche eine Verknüpfung zu einer "Redundanz" (WP2) und Log-Eigenschaften "Logging" (WP3) hat. Die Anforderung WP1 wurde aus den Anforderungen REQ1 und REQ2 ermittelt oder entspricht zumindest einer vorn diesen.

Die Anforderung WP2 steht wiederum mit Wissenspunkten 22, welche ein erstes und ein zweites Protokoll NPR1, NPR2 repräsentieren, in Verbindung. Der Wissenspunkt WP3, welcher die Anforderung "Logging" repräsentiert, steht mit einem Wissenspunkt 22, der ein drittes Protokoll NPR3 repräsentiert, in Verbindung. Die Wissenspunkte 21, 22 stellen den für das zu bestimmende Protokoll relevanten Teil des an sich wesentlich größeren Wissensgraphen 20 dar.

Aufgrund der oben ermittelten weiteren Informationen wurde durch die Vorrichtung 100 ermittelt, dass das erste Protokoll NPR1 für die Konfiguration zu verwenden ist ("CONF"). Demgegenüber wurde durch die Vorrichtung 100 ermittelt, dass das zweite Protokoll NPR2 für die Verwendung in dem Kommunikationsnetzwerk 30 nicht geeignet ist. Als Ergebnis wird die Information "CONF" (stellvertretend für "confirmation") dargestellt. In Bezug auf das dritte Protokoll NPR 3 wurde durch die Vorrichtung 100 ermittelt, dass für die Konfiguration nicht alle Informationen vorliegen. Daher wird als Ergebnis die Information "INREQ" dargestellt.

In dem zweiten Anzeigebereich 13 wird dem Nutzer in einer tabellarischen Übersicht dann für sämtliche seiner Geräte NWG die Information visualisiert, ob eine Konfiguration erfolgreich automatisiert durchgeführt werden konnte oder weitere Nutzereingaben erforderlich sind. Die Tabelle enthält in der ersten Spalte die Geräte ("NWG"), die mit ihren Bezugszeichen 31 bis 33 gekennzeichnet sind, einen Typ der Geräte ("NWGT"), eine erste konfigurierte oder konfigurierbar Technologie CT1, eine zweite konfigurierte oder konfigurierbare Technologie CT2 sowie Statusinformationen ST1, ST2.

Die Information über den Gerätetyp NWGT dient lediglich der Information des Nutzers, um welches Gerät NWG es sich handelt. In der Spalte der ersten konfigurierten Technologie CT1 sind beispielhaft die zu verwendenden in der Spalte CT2 der zweiten konfigurierten oder konfigurierbaren Technologie sind grundsätzlich für die Verwendung mögliche Protokolle, hier: NPR3, dargestellt, wobei für das Gerät 31 Informationen fehlen. Aus diesem Grund ist die Information über die mögliche Verwendung des Protokolls NPR3 schraffiert dargestellt. In den Spalten des ersten und zweiten Status ST1, ST2 ist entweder die Information über einen fehlenden Wert ("MV") oder die Information über das Vorhandensein aller Werte ("OK") angegeben. In der zweiten Statusspalte ST2 ist durch ein Piktogramm für den Nutzer ersichtlich, ob die automatisierte Konfiguration vollständig abgeschlossen werden konnte oder nicht.

Der Nutzer kann seine Anforderungen das Eingabefeld 11 in natürlicher Schreibweise oder Sprache eingeben, welche dann über den Wissensgraph 20 mit konkreten Technologien verknüpft wird oder werden. Für die Interpretation der natürlichen Schreibweise oder Sprache können bestehende Technologien verwendet werden. Ferner wird durch die Vorrichtung 100 überprüft, welche Geräte 31 bis 37 in dem Kommunikationsnetzwerk 30 eingesetzt werden, welche Einstellungen prinzipiell auf diesen möglich sind und welche Einstellungen bereits auf diesen konfiguriert sind. Dabei wird nicht unterschieden, ob das jeweilige Gerät geplant oder erkannt wurde. Auf Basis dieser Informationen kann sich die Vorrichtung 100 für ein zu verwendendes Protokoll NPR entscheiden, welches am besten für den Anwendungsfall geeignet ist. Vorzugsweise wird dasjenige Protokoll gewählt, auf welche der Wissensgraph verweist, für die eine Konfigurationsdomäne vorhanden ist und die von sämtlichen der Geräten 31 bis 37 verwiesen wird.

Die Protokolle NPR1, NPR2, NPR3 enthalten grundsätzlich die Information, wie bestimmte Parameter auf verschiedenen Typen von Geräten eingestellt werden müssen.

Besteht die Anforderung des Nutzers beispielsweise darin, dass das Kommunikationsnetzwerk eine hohe Verfügbarkeit haben soll, so enthält der Wissensgraph 20 die Verbindungen zwischen den betreffenden Keywords und der diese Anforderung am besten erfüllende Technologie (d.h. des Protokolls). So lassen sich über Keywords in der Eingabe auf Technologien schließen.

Die Verknüpfungen in dem Wissensgraph können eine Bewertung umfassen. Kommt es zu einem Konflikt zwischen mehreren Verknüpfungen (Pfaden), kann über die Bewertung der Verbindungen eine Entscheidung getroffen werden, welcher Pfad am besten geeignet ist. Diese Vorgehensweise wird durch Methoden der Graphentheorie berücksichtigt.

Wie in dem in Figur 2 beschriebenen Beispiel wird das Keyword WP1 (z.B. "Zuverlässigkeit") über den Wissensgraph mit den Technologien NPR1, NPR2 und NPR3 verknüpft. NPR1 kann beispielsweise für die Technologie RSTP, NPR2 für die Technologie MRP und NPR3 für die Technologie NTP stehen. In diesem Fall muss die Entscheidung zwischen NPR1 und NPR2 bzw. RSTP und MRP getroffen werden. Die Entscheidung für NRP1 bzw. RSTP wurde getroffen, da dies von den entsprechenden Geräten 31 bis 37 in dem Kommunikationsnetzwerk 30 unterstützt wird. Über die Technologie weiß die Vorrichtung, wie das Protokoll NRP1 bzw. RSTP auf den verschiedenen Geräten 31 bis 37 konfiguriert werden muss. Neben der Unterstützung wird auf dieser Ebene auch eine Priorisierung der Verbindungen zur Bewertung herangezogen. Werden NRP1 und NRP2 bzw. RSTP und MRP von allen Geräten 31 bis 37 des Kommunikationsnetzwerks 30 unterstützt, so wird beispielsweise das Protokoll NRP2 bzw. MRP ausgewählt, da die Verbindung eine höhere Priorität hat. Die Priorität von Verbindungen kann, insbesondere vorab, über Maschinenlernverfahren ermittelt worden sein, um Anforderungen von Nutzern und/oder in einem Standard enthaltene Erfordernisse oder Verbote zu berücksichtigen.

Über die Benutzerschnittstelle 102 wird dem Nutzer der betroffene Ausschnitt des Wissensgraphen in dem ersten Anzeigebereich 12 dargestellt, sowie die prinzipiell in Frage kommenden Technologien bzw. Protokolle. So wird sichergestellt, dass der Nutzer die Entscheidung transparent nachvollziehen kann. Zudem wird neben den Protokollen eine Nutzerinformation eingeblendet, die den Nutzer in die Lage versetzt, warum die Entscheidung durch das erfindungsgemäße Verfahren in der gewählten Weise ausgefallen ist.

Durch das beschriebene Vorgehen wird die Fehleranfälligkeit bei der Entscheidungsfindung für bestimmte Technologien bzw. Protokolle massiv reduziert. Das fachliche Wissen über Netzwerktechnologien wird mit Hilfe des erfindungsgemäßen Verfahrens aufbereitet und es wird weniger versierten Nutzern ermöglicht, diese konkret anzuwenden.

*Unabhängig vom grammatikalischen Geschlecht eines bestimmten Begriffes sind Personen mit männlicher, weiblicher oder anderer Geschlechteridentität mit umfasst.*

## Patentansprüche

1. Verfahren zum computerimplementierten Ermitteln eines zu verwendenden Protokolls (NPR1, NPR2, NPR3) aus einer Vielzahl möglicher Protokolle (NPR1, NPR2, NPR3) in einem Kommunikationsnetzwerk (30), das eine Mehrzahl an Geräten (31-37) umfasst, die in vorgegebener Weise miteinander vernetzt sind, umfassend die folgenden Schritte:
- Einlesen eines Wissensgraphen (20), der Wissenspunkte (WP1, WP2, WP3) umfasst, wobei die Wissenspunkte (WP1, WP2, WP3) eine Information über eine Netzwerktopologie, ein Protokoll (NPR1, NPR2, NPR3), Gerätefähigkeiten oder eine Anforderung (REQ1, REQ2) umfassen, und wobei die Wissenspunkte (WP1, WP2, WP3) in dem Wissensgraphen (20) in vorgegebener Weise miteinander verknüpft sind;
- Einlesen zumindest einer Nutzer-Anforderung (UREQ), die an das Netzwerk (30) gestellte technische Eigenschaften charakterisiert;
- Einlesen einer Nutzer-Eingabe, die zumindest ein Gerät (31-37) der Mehrzahl an Geräten (31-37) des zu konfigurierenden Netzwerks (30) als bekanntes Gerät (31, 35) repräsentiert;
- Ermitteln von Netzwerkeigenschaften des Kommunikationsnetzwerks (30) aus zuvor ermittelten Informationen des bekannten Geräts (31, 35);
- Durchsuchen des Wissensgraphen (20), wobei die zumindest eine Nutzer-Anforderung (UREQ) und der Netzwerkeigenschaften des Kommunikationsnetzwerks (30) als Eingangsinformationen verarbeitet werden, um das zu verwendende Protokoll (NPR1, NPR2, NPR3) aus dem Wissensgraphen (20) zu bestimmen und auszulesen;
- automatisierte Konfiguration der Geräte (31-37) des Kommunikationsnetzwerks (30) mit Parametern des bestimmten und zu verwendenden Protokolls (NPR).

2. Verfahren nach Anspruch 1, bei dem das Ermitteln von Netzwerkeigenschaften das Ermitteln der weiteren Geräte (32-34, 36, 37) des Kommunikationsnetzwerks (30) aus zuvor ermittelten Informationen des bekannten Geräts (31, 35) umfasst.

3. Verfahren nach Anspruch 1 oder 2, bei dem das Ermitteln von Netzwerkeigenschaften das Ermitteln der Netzwerktopologie des Kommunikationsnetzwerks (30) umfasst.

4. Verfahren nach Anspruch 3, bei dem die Netzwerktopologie abschnittsweise unterschiedlich ist.

5. Verfahren nach einem der vorhergehenden Ansprüche, bei dem die Netzwerktopologie eine Ringtopologie und/oder eine Sterntopologie umfasst.

6. Verfahren nach einem der vorhergehenden Ansprüche, bei dem das Ermitteln von Netzwerkeigenschaften das Ermitteln umfasst, welche Einstellungen auf den oder für die Geräte (31-37) gespeichert sind.

7. Verfahren nach einem der vorhergehenden Ansprüche, bei dem das Ermitteln von Netzwerkeigenschaften das Ermitteln umfasst, welche Einstellungen auf den oder für die Geräte (31-37) konfigurierbar sind.

8. Verfahren nach einem der vorhergehenden Ansprüche, bei dem ein relevanter Teil des Wissensgraphen (20), der den Pfad zu dem bestimmten und zu verwendenden Protokoll (NPR) umfasst, auf einer Nutzerschnittstelle (102) für den Nutzer als Information ausgegeben wird.

9. Verfahren nach einem der vorhergehenden Ansprüche, bei dem auf der Nutzerschnittstelle (102) ein Vorschlag für den Nutzer oder eine durch den Nutzer änderbare Vorauswahl als zu verwendendes Protokoll (NPR) ausgegeben wird, wenn bei der Durchsuchung des Wissensgraphen (20) mehr als ein mögliches Protokoll bestimmt wurde.

10. Verfahren nach einem der vorhergehenden Ansprüche, bei dem als Netzwerkprotokoll RSTP, PTP, NTP, MRP verwendet wird.

11. Verfahren nach einem der vorhergehenden Ansprüche, bei dem das Durchsuchen des Wissensgraphen (20) als Eingangsinformationen die zumindest eine Nutzer-Anforderung (UREQ) und aus den Netzwerkeigenschaften ermittelte Informationen über die Geräte (31-37) des Kommunikationsnetzwerks (30) verarbeitet werden.

12. Verfahren nach einem der vorhergehenden Ansprüche, bei dem die Anforderung (REQ1, REQ2) eine Nutzer-Anforderung (UREQ) an das Kommunikationsnetzwerk (30) ist, die einen oder mehrere der folgenden Parameter umfasst: Umschaltzeit zwischen Kommunikationsverbindungen, Verfügbarkeit eines oder mehrerer Geräte und/oder Kommunikationsverbindungen, Zuverlässigkeit eines oder mehrerer Geräte und/oder Kommunikationsverbindungen, Namensauflösung.

13. Computerprogrammprodukt, umfassend Befehle, die bei der Ausführung des Programms durch einen Computer diesen veranlassen, das Verfahren gemäß einem der Ansprüche 1 bis 12 auszuführen.

14. Vorrichtung (100) zum computerimplementierten Ermitteln eines zu verwendenden Protokolls (NPR1, NPR2, NPR3) aus einer Vielzahl möglicher Protokolle (NPR1, NPR2, NPR3) in einem Kommunikationsnetzwerk (30), das eine Mehrzahl an Geräten (31-37) umfasst, die in vorgegebener Weise miteinander vernetzt sind, wobei die Vorrichtung (100) eine Recheneinheit (101) umfasst, die dazu eingerichtet, die folgenden Schritte durchzuführen:
- Einlesen eines Wissensgraphen (20), der Wissenspunkte (WP1, WP2, WP3) umfasst, wobei die Wissenspunkte (WP1, WP2, WP3) eine Information über eine Netzwerktopologie, ein Protokoll (NPR1, NPR2, NPR3), Gerätefähigkeiten oder eine Anforderung (REQ1, REQ2) umfassen, und wobei die Wissenspunkte (WP1, WP2, WP3) in dem Wissensgraphen (20) in vorgegebener Weise miteinander verknüpft sind;
- Einlesen zumindest einer Nutzer-Anforderung (UREQ), die an das Netzwerk (30) gestellte technische Eigenschaften charakterisiert;
- Einlesen einer Nutzer-Eingabe, die zumindest ein Gerät (31-37) der Mehrzahl an Geräten (31-37) des zu konfigurierenden Netzwerks (30) als bekanntes Gerät (31, 35) repräsentiert;
- Ermitteln von Netzwerkeigenschaften des Kommunikationsnetzwerks (30) aus zuvor ermittelten Informationen des bekannten Geräts (31, 35);
- Durchsuchen des Wissensgraphen (20), wobei die zumindest eine Nutzer-Anforderung (UREQ) und der Netzwerkeigenschaften des Kommunikationsnetzwerks (30) als Eingangsinformationen verarbeitet werden, um das zu verwendende Protokoll (NPR1, NPR2, NPR3) aus dem Wissensgraphen (20) zu bestimmen und auszulesen;
- automatisierte Konfiguration der Geräte (31-37) des Kommunikationsnetzwerks (30) mit Parametern des bestimmten und zu verwendenden Protokolls (NPR).

15. Vorrichtung nach Anspruch 14, wobei die Vorrichtung (100) so konfiguriert ist, dass sie ein Verfahren nach einem der Ansprüche 2 bis 12 durchführt.
